# EUROPÄISCHE PATENTSCHRIFT

(11) **EP 1 604 865 B1**
(45) Veröffentlichungstag und Bekanntmachung des Hinweises auf die Patenterteilung: **20.02.2008**
(21) Anmeldenummer: 05011564.1
(22) Anmeldetag: 30.05.2005
(51) Int. Cl.: B60Q 1/14, B60Q 1/26

(54) **Beleuchtungseinrichtung für ein Fahrzeug umfassend einen Sensor**
Lighting device for a vehicle comprising a sensor
Dispositif d'éclairage pour un véhicule comportant un capteur

(30) Priorität: 08.06.2004 DE 102004027932
(43) Veröffentlichungstag der Anmeldung: 14.12.2005
(73) Patentinhaber: Volkswagen Aktiengesellschaft, 38436 Wolfsburg (DE)
(72) Erfinder: Böttcher, Anja, 37197 Hattorf (DE); Eichmann, Falk, 38126 Braunschweig (DE); Wollenberg, Marko, 38162 Cremlingen (DE)

(56) Entgegenhaltungen:
- GB-A- 1 091 419
- US-A- 2 928 025
- US-A- 4 862 037
- US-A- 5 003 288
- US-A- 5 086 253
- US-B1- 6 275 145

## Beschreibung

Die vorliegende Erfindung betrifft eine Beleuchtungseinrichtung für ein Fahrzeug mit einem Leuchtenmodul mit zumindest einer Lichtquelle, die in dem Leuchtenmodul angeordnet ist, und einem außerhalb des Leuchtenmoduls angeordneten externen Steuergerät, das mit dem Leuchtenmodul gekoppelt ist.

Es ist bekannt, die Intensität der Lichtemission von Fahrzeugleuchten zu steuern. Es gibt beispielsweise eine dimmbare Rückleuchte. Das Steuergerät für eine solche Leuchte greift z. B. auf externe Sensoren zu, um das Signal für die Intensität der Lichtemission zu berechnen. Nachteilhaft an einer solchen Architektur für eine Beleuchtungseinrichtung ist, dass herkömmliche Beleuchtungseinrichtungen, deren Lichtintensität nicht steuerbar ist, nur mit großem Aufwand und hohen Kosten auf eine verbesserte Beleuchtungseinrichtung aufgerüstet werden können, deren Lichtintensität steuerbar ist. Einerseits müssen in diesen Fällen alle Leuchtenmodule der Beleuchtungseinrichtung ausgetauscht werden und andererseits stellt die Verkabelung mit den Sensoren bzw. der Leuchtenmodule untereinander ein Problem dar.

Die GB 1,091,419 beschreibt eine Scheinwerferanordnung für ein Fahrzeug mit einem Scheinwerfer, der eine Niedervoltlichtquelle und eine fotoelektrische Zelle enthält und der mit einer Schaltung verbunden ist, durch welche die Lichtintensität variierbar ist.

Es ist die Aufgabe der vorliegenden Erfindung, eine Beleuchtungseinrichtung der Eingangs genannten Art bereitzustellen, bei der die Intensität der Lichtemission der Lichtquellen in Abhängigkeit von Fahr- oder Lichtsituationen steuerbar ist und die ohne großen Kostenaufwand ein herkömmliches Leuchtenmodul, dessen Lichtintensität nicht steuerbar ist, ersetzen kann.

Diese Aufgabe wird erfindungsgemäß durch eine Beleuchtungseinrichtung mit den Merkmalen des Anspruchs 1 gelöst. Vorteilhafte Aus- und Weiterbildungen ergeben sich aus den Unteransprüchen.

Bei der erfindungsgemäßen Beleuchtungseinrichtung weist das Leuchtenmodul ferner einen Sensor oder mehrere Sensoren auf, der/die mit dem externen Steuergerät verbunden ist/sind. Die Sensoren werden somit erfindungsgemäß in das Leuchtenmodul integriert, daher reicht es bei dem Aufrüsten eines herkömmlichen Leuchtenmoduls ohne Sensoren aus, dieses auszutauschen und die Sensoren mit dem externen Steuergerät, das außerhalb des Leuchtenmoduls vorgesehen ist, zu verbinden.

Gemäß einem bevorzugten Ausführungsbeispiel der vorliegenden Erfindung ist der Sensor ein optischer Sensor. Er liefert insbesondere ein mit der Umgebungshelligkeit korreliertes Signal, ein mit der Sichtweitenreduktion durch Nebel und/oder Regen korreliertes Signal, ein mit dem Abstand zu anderen Objekten und/oder Fahrzeugen korreliertes Signal und/oder ein mit der Verschmutzung einer Lichtscheibe korreliertes Signal. Derartige Signale sind insbesondere für die Ansteuerung der Lichtquellen in den Leuchtenmodulen wichtig.

Gemäß einem bevorzugten Ausführungsbeispiel der vorliegenden Erfindung ist der Sensor oder sind die Sensoren mit einem lokalen in dem Leuchtenmodul angeordneten Steuergerät verbunden, und das lokale Steuergerät ist mit dem außerhalb des Leuchtenmoduls angeordneten externen Steuergerät verbunden. In dem lokalen Steuergerät kann bereits eine erste Verarbeitung der Signale der Sensoren geschehen. Beispielsweise kann ein Soll-Wert für die Intensität der Lichtemission bestimmter Lichtquellen des Leuchtenmoduls oder mehrerer Leuchtenmodule ermittelt werden.

Gemäß einer weiteren bevorzugten Ausgestaltung der erfindungsgemäßen Beleuchtungseinrichtung ist das außerhalb des Leuchtenmoduls angeordnete externe Steuergerät so ausgebildet, dass es an die Lichtquelle oder die Lichtquellen ein Steuersignal überträgt, das von dem oder den Signal(en) des Sensors oder der Sensoren abhängt. Auf diese Weise kann eine effektive Regelung der Intensität der Lichtemission der Lichtquellen des Leuchtenmoduls erzielt werden, da die Intensität der Lichtemission der Lichtquellen beispielsweise von der Umgebungshelligkeit, der durch Nebel oder Regen reduzierten Sichtweite, des Abstands zu anderen Objekten oder Fahrzeugen sowie der Verschmutzung der Lichtscheibe abhängen kann.

Die erfindungsgemäße Beleuchtungseinrichtung ist dadurch gekennzeichnet, dass die Lichtquelle mit dem externen Steuergerät über einen ersten Fahrzeugbus verbunden ist und der Sensor oder die Sensoren bzw. das lokale Steuergerät mit dem außerhalb des Leuchtenmoduls angeordneten externen Steuergerät über einen zweiten Fahrzeugbus verbunden sind. Der erste Fahrzeugbus kann beispielsweise der Fahrzeugbus sein, der herkömmlicherweise für die Ansteuerung der Lichtquellen des Leuchtenmoduls vorgesehen ist. Dies ist normalerweise der CAN-Bus. Der zweite Fahrzeugbus kann ein LIN-(local interconnecting network)-Bus sein. Das Leuchtenmodul weist hierfür einen Stecker für die Kopplung an den ersten Fahrzeugbus auf und einen separaten Stecker für die Kopplung an den zweiten Fahrzeugbus. Auf diese Weise kann eine Beleuchtungseinrichtung mit einem herkömmlichen Leuchtenmodul sehr einfach auf eine Beleuchtungseinrichtung gemäß der Erfindung aufgerüstet werden. Die Leuchtenmodule müssen nur ausgetauscht werden und die Sensoren über den Stecker für den LIN-Bus mit diesem Bus verbunden werden. Das externe Steuergerät greift dann sowohl auf den LIN-Bus als auch auf den CAN-Bus zu und kann damit die Signale der Sensoren auslesen und ein von diesen Signalen abhängiges Steuersignal für die Lichtquellen des Leuchtenmoduls erzeugen.

Bei der Beleuchtungseinrichtung kann es sich um eine beliebige lichttechnische Einrichtung des Fahrzeugs handeln. Es handelt sich insbesondere um eine Heckleuchte oder einen Scheinwerfer. Falls der Beleuchtungseinrichtung zumindest zwei Leuchtenmodule zugeordnet sind, reicht es aus, dass nur ein Leuchtenmodul die Sensoren umfasst.

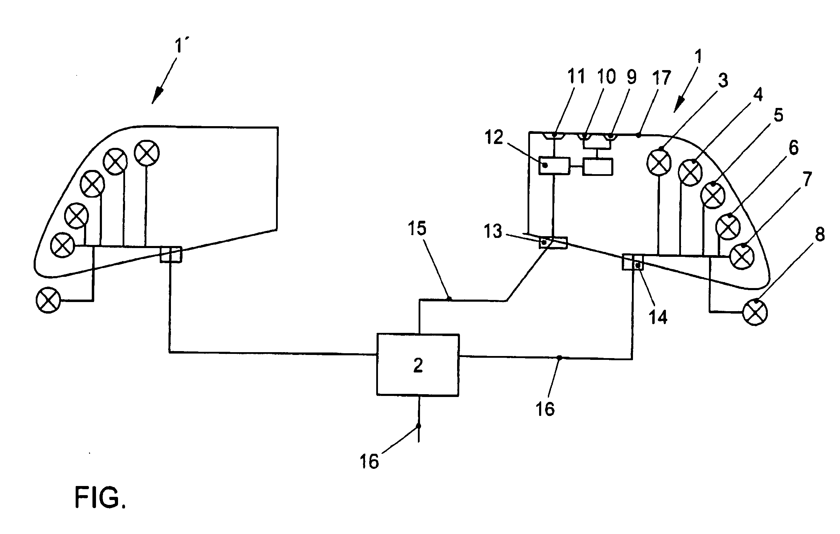

Die Erfindung wird nun anhand eines Ausführungsbeispiels mit Bezug zu der beigefügten Figur erläutert.

Die Figur zeigt schematisch ein Ausführungsbeispiel der erfindungsgemäßen Beleuchtungseinrichtung.

Das im Folgenden beschriebene Ausführungsbeispiel betrifft eine Heckleuchte. Die Erfindung kann jedoch auch bei anderen Beleuchtungseinrichtungen des Fahrzeugs, wie beispielsweise bei einem Scheinwerfer implementiert werden.

Die Beleuchtungseinrichtung umfasst ein Leuchtenmodul 1 mit mehreren Lichtquellen 3 bis 7. Die Lichtemission der Lichtquelle 3 kann ein Schlusslicht, die Lichtemission der Lichtquelle 4 ein Bremslicht, die der Lichtquelle 5 ein Blinklicht, die der Lichtquelle 6 ein Rückfahrlicht und die der Lichtquelle 7 ein Nebellicht bereitstellen. Alle Lichtquellen 3 bis 7 sind elektrisch mit einem Stecker 14 verbunden, an welchen ein Fahrzeugbus 16, z. B. der CAN-Bus, oder eine andere elektrische Verbindung des Fahrzeugs angeschlossen ist. Ferner kann eine Lichtquelle 8 für ein Seitenmarkierungslicht mit dem Stecker 14 verbunden sein.

Der Stecker 14 ist über den Fahrzeugbus 16 mit einem Lichtsteuergerät 2 verbunden, das außerhalb des Leuchtenmoduls 1 angeordnet ist. Das Lichtsteuergerät 2 stellt die Steuersignale bereit, welche die Lichtquellen 3 bis 8 ansteuern. Mit diesen Steuersignalen kann außerdem die Intensität der Lichtemission dieser Lichtquellen geregelt werden.

Das Leuchtenmodul 1 umfasst außerdem die Sensoren 9 bis 11. Im vorliegenden Ausführungsbeispiel sind dies ein Schmutzsensor 9, ein Helligkeitssensor 10 und ein Sichtweiten- und Abstandssensor 11. Es handelt sich dabei insbesondere um optische Sensoren. Der Schmutzsensor 9 liefert ein Signal, das mit der Verschmutzung der Lichtscheibe 17 des Leuchtenmoduls 1 korreliert ist Der Helligkeitssensor 10 liefert ein mit der Umgebungshelligkeit korreliertes Signal. Der Sichtweiten- und Abstandssensor 11 liefert einerseits ein Signal, das mit der Sichtweitenreduktion durch Nebel und/oder Regen korreliert ist, sowie andererseits ein Signal, das mit dem Abstand zu anderen Objekten und/oder Fahrzeugen korreliert ist.

Die Signale der Sensoren 9 bis 11 werden an ein lokales Steuergerät 12 übertragen, das in dem Leuchtenmodul 1 angeordnet ist. Das lokale Steuergerät 12 ist elektrisch mit einem separaten zweiten Stecker 13 verbunden. In dem lokalen Steuergerät 12 findet eine erste Verarbeitung der von den Sensoren 9 bis 11 gelieferten Signale statt. Aus den Signalen der Sensoren 9 bis 11 wird ein Sollwert für die Intensität der Lichtemission einzelner oder mehrerer Lichtquellen 3 bis 8 des Leuchtenmoduls 1 berechnet. An den Stecker 13 ist der LIN-Bus des Fahrzeugs angeschlossen. Dieser LIN-Bus ist auch mit dem externen Lichtsteuergerät 2 verbunden. Der Sollwert für die Intensität der Lichtemission der Lichtquellen wird somit über den separaten Stecker 13 und den LIN-Bus an das externe Lichtsteuergerät 2 übertragen.

Das Lichtsteuergerät 2 berechnet aus den Schaltzuständen, welches es über den Fahrzeugbus 16 für die Ansteuerung der Lichtquellen 3 bis 8 erhalten hat, und den von dem lokalen Steuergerät 12 übertragenem Sollwert bzw. den übertragenen Sollwerten Steuersignale für die Lichtquellen 3 bis 8. Über den Fahrzeugbus 16 erhält das Lichtsteuergerät 2 beispielsweise die Information, welche Lichtquellen eingeschaltet und welche ausgeschaltet sind. Über den LIN-Bus 15 erhält das Lichtsteuergerät 2 dann die Information, wie groß die Intensität der Lichtemission dieser Lichtquellen 3 bis 8 sein soll. Das Steuersignal für einzelne oder mehrere der Lichtquellen 3 bis 8 hängt somit von einzelnen oder mehreren Signalen der Sensoren 9 bis 11 ab. Das Lichtsteuergerät 2 kann beispielsweise die Signale der Sensoren 9 bis 11 mit einer konventionellen Dimmfunktion verknüpfen. Die Steuersignale für die Lichtquellen 3 bis 8 werden über den Fahrzeugbus 16 und den Stecker 14 an die einzelnen Lichtquellen 3 bis 8 übertragen.

In dem gezeigten Ausführungsbeispiel umfasst die Heckleuchte noch ein weiteres Leuchtenmodul 1', welches auf der anderen Seite des Fahrzeugs angeordnet ist. Dieses weitere Leuchtenmodul 1' umfasst keine Sensoren. Es sind nur die Lichtquellen und der Stecker für den Fahrzeugbus 16 integriert. Das Lichtsteuergerät 2 überträgt Leuchtenmodul 1' die selben Steuersignale für die entsprechenden Lichtquellen, wie dem Leuchtenmodul 1.

Eine herkömmliche Beleuchtungseinrichtung umfasst das Leuchtenmodul 1' sowohl auf der rechten als auch auf der linken Seite. Soll eine solche Beleuchtungseinrichtung nun aufgerüstet werden, reicht es, auf einer Seite das Leuchtenmodul 1' durch das Leuchtenmodul 1 zu ersetzen und den LIN-Bus, welcher üblicherweise bereits an das Lichtsteuergerät 2 angeschlossen ist, über den Stecker 13 mit dem neuen Leuchtenmodul 1 zu verbinden. Auf diese Weise ist es sehr einfach und kostengünstig möglich, eine herkömmliche Beleuchtungseinrichtung mit einer Sensorik aufzurüsten und alle Lichtquellen der Beleuchtungseinrichtung mit Signalen anzusteuern, welche von den Messwerten der Sensoren 9 bis 11 abhängen.

### Bezugszeichenliste

- 1: Leuchtenmodul
- 1': Leuchtenmodul ohne Sensoren
- 2: externes Lichtsteuergerät
- 3: Lichtquelle für ein Schlusslicht
- 4: Lichtquelle für ein Bremslicht
- 5: Lichtquelle für ein Blinklicht
- 6: Lichtquelle für ein Rückfahrlicht
- 7: Lichtquelle für ein Nebellicht
- 8: Lichtquelle für ein Seitenmarkierungslicht
- 9: Schmutzsensor
- 10: Helligkeitssensor
- 11: Sichtweiten- und Abstandssensor
- 12: lokales Steuergerät
- 13: Stecker für den LIN-Bus
- 14: Stecker für den Fahrzeugbus
- 15: LIN-Bus
- 16: Fahrzeugbus
- 17: Lichtscheibe

## Patentansprüche

1. Beleuchtungseinrichtung für ein Fahrzeug mit einem Leuchtenmodul (1), zumindest einer Lichtquelle (3), die in dem Leuchtenmodul (1) angeordnet ist, und einem außerhalb des Leuchtenmoduls (1) angeordneten externen Steuergerät (2), das mit dem Leuchtenmodul (1) gekoppelt ist, wobei das Leuchtenmodul (1) ferner einen Sensor (9) oder mehrere Sensoren (9, 10, 11) aufweist, der/die mit dem externen Steuergerät (2) verbunden ist/sind, **dadurch gekennzeichnet, dass** die Lichtquelle (3) mit dem externen Steuergerät (2) über einen ersten Fahrzeugbus (16) und der Sensor (9) oder die Sensoren (9, 10, 11) mit dem außerhalb des Leuchtenmoduls (1) angeordneten externen Steuergerät (2) über einen zweiten Fahrzeugbus (15).verbunden ist/sind und dass das Leuchtenmodul (1) einen Stecker (14) für die Kopplung an den ersten Fahrzeugbus (16) und einen separaten Stecker (13) für die Kopplung an den zweiten Fahrzeugbus (15) aufweist.

2. Beleuchtungseinrichtung nach Anspruch 1, **dadurch gekennzeichnet, dass** der Sensor (9) ein optischer Sensor ist.

3. Beleuchtungseinrichtung nach Anspruch 1 oder 2, **dadurch gekennzeichnet, dass** der Sensor (10) ein mit der Umgebungshelligkeit korreliertes Signal liefert.

4. Beleuchtungseinrichtung nach einem der vorstehenden Ansprüche, **dadurch gekennzeichnet, dass** der Sensor (11) ein mit der Sichtweitenreduktion durch Nebel und/oder Regen korreliertes Signal liefert.

5. Beleuchtungseinrichtung nach einem der vorstehenden Ansprüche, **dadurch gekennzeichnet, dass** der Sensor (11) ein mit dem Abstand zu anderen Objekten und/oder Fahrzeugen korreliertes Signal liefert.

6. Beleuchtungseinrichtung nach einem der vorstehenden Ansprüche, **dadurch gekennzeichnet, dass** der Sensor (9) ein mit der Verschmutzung einer Lichtscheibe (17) korreliertes Signal liefert.

7. Beleuchtungseinrichtung nach einem der vorstehenden Ansprüche, **dadurch gekennzeichnet, dass** der Sensor (9) oder die Sensoren (9, 10, 11) mit einem lokalen in dem Leuchtenmodul (1) angeordneten Steuergerät (12) verbunden sind, und das lokale Steuergerät (12) mit dem außerhalb des Leuchtenmoduls (1) angeordneten externen Steuergerät (2) verbunden ist.

8. Beleuchtungseinrichtung nach einem der vorstehenden Ansprüche, **dadurch gekennzeichnet, dass** das außerhalb des Leuchtenmoduls (1) angeordnete externe Steuergerät (2) so ausgebildet ist, dass es an die Lichtquelle (3) oder die Lichtquellen (3 bis 8) ein Steuersignal überträgt, das von dem oder den Signal(en) des Sensors (9) oder der Sensoren (9, 10, 11) abhängt

9. Beleuchtungseinrichtung nach einem der vorstehenden Ansprüche, **dadurch gekennzeichnet, dass** die Beleuchtungseinrichtung eine Heckleuchte oder ein Scheinwerfer ist.

10. Beleuchtungseinrichtung nach einem der vorstehenden Ansprüche, **dadurch gekennzeichnet, dass** der Beleuchtungseinrichtung zumindest zwei Leuchtenmodule (1, 1') zugeordnet sind, wobei nur ein Leuchtenmodul (1) die Sensoren (9, 10, 11) umfasst.

## Claims

1. Lighting device for a vehicle with a luminaire module (1), at least one light source (3), which is arranged in the luminaire module (1), and an external control device (2), which is arranged outside the luminaire module (1) and is coupled to the luminaire module (1), the luminaire module (1) also having a sensor (9) or a plurality of sensors (9, 10, 11), which is/are connected to the external control device (2), **characterized in that** the light source (3) is connected to the external control device (2) via a first vehicle bus (16), and the sensor (9) or the sensors (9, 10, 11) is/are connected to the external control device (2), which is arranged outside the luminaire module (1), via a second vehicle bus (15), and **in that** the luminaire module (1) has a plug (14) for coupling to the first vehicle bus (16) and a separate plug (13) for coupling to the second vehicle bus (15).

2. Lighting device according to Claim 1, **characterized in that** the sensor (9) is an optical sensor.

3. Lighting device according to Claim 1 or 2, **characterized in that** the sensor (10) produces a signal which is correlated with the ambient brightness.

4. Lighting device according to one of the preceding claims, **characterized in that** the sensor (11) produces a signal which is correlated with the reduction in visibility distance as a result of fog and/or rain.

5. Lighting device according to one of the preceding claims, **characterized in that** the sensor (11) produces a signal which is correlated with the distance from other objects and/or vehicles.

6. Lighting device according to one of the preceding claims, **characterized in that** the sensor (9) produces a signal which is correlated with the amount of dirt on a lens (17).

7. Lighting device according to one of the preceding claims, **characterized in that** the sensor (9) or the sensors (9, 10, 11) is/are connected to a local control device (12), which is arranged in the luminaire module (1), and the local control device (12) is connected to the external control device (2), which is arranged outside the luminaire module (1).

8. Lighting device according to one of the preceding claims, **characterized in that** the external control device (2), which is arranged outside the luminaire module (1), is designed such that it transmits a control signal to the light source (3) or the light sources (3 to 8), which control signal is dependent on the signal(s) of the sensor (9) or the sensors (9, 10, 11).

9. Lighting device according to one of the preceding claims, **characterized in that** the lighting device is a rear light or a headlamp.

10. Lighting device according to one of the preceding claims, **characterized in that** at least two luminaire modules (1, 1') are associated with the lighting device, only one luminaire module (1) comprising the sensors (9, 10, 11).

## Revendications

1. Dispositif d'éclairage pour un véhicule comprenant un module d'éclairage (1), au moins une source de lumière (3) qui est disposée dans le module d'éclairage (1) et un module de commande externe (2) disposé à l'extérieur du module d'éclairage (1) et qui est connecté au module d'éclairage (1), le module d'éclairage (1) présentant en plus un capteur (9) ou plusieurs capteurs (9, 10, 11) qui est/sont relié/s avec le module de commande externe (2), **caractérisé en ce que** la source de lumière (3) est reliée avec le module de commande externe (2) par le biais d'un premier bus de véhicule (16) et le capteur (9) ou les capteurs (9, 10, 11) est/sont relié/s avec le module de commande externe (2) disposé à l'extérieur du module d'éclairage (1) par le biais d'un deuxième bus de véhicule (15) et que le module d'éclairage (1) présente une fiche (14) pour la connexion au premier bus de véhicule (16) et une fiche séparée (13) pour la connexion au deuxième bus de véhicule (15).

2. Dispositif d'éclairage selon la revendication 1, **caractérisé en ce que** le capteur (9) est un capteur optique.

3. Dispositif d'éclairage selon la revendication 1 ou 2, **caractérisé en ce que** le capteur (10) délivre un signal en corrélation avec la luminosité ambiante.

4. Dispositif d'éclairage selon l'une des revendications précédentes, **caractérisé en ce que** le capteur (11) délivre un signal en corrélation avec la réduction de la distance de visibilité résultant du brouillard et/ou de la pluie.

5. Dispositif d'éclairage selon l'une des revendications précédentes, **caractérisé en ce que** le capteur (11) délivre un signal en corrélation avec la distance par rapport à d'autres objets et/ou véhicules.

6. Dispositif d'éclairage selon l'une des revendications précédentes, **caractérisé en ce que** le capteur (9) délivre un signal en corrélation avec l'encrassement d'une optique de feu (17).

7. Dispositif d'éclairage selon l'une des revendications précédentes, **caractérisé en ce que** le capteur (9) ou les capteurs' (9, 10, 11) est/sont relié/s avec un module de commande (12) local disposé dans le module d'éclairage (1) et le module de commande local (12) est relié avec le module de commande externe (2) disposé à l'extérieur du module d'éclairage (1).

8. Dispositif d'éclairage selon l'une des revendications précédentes, **caractérisé en ce que** le module de commande externe (2) disposé. à l'extérieur du module d'éclairage (1) est configuré de telle sorte qu'il transmet à la source de lumière (3) ou aux sources de lumière (3 à 8) un signal de commande qui dépend du ou des signaux du capteur (9) ou des capteurs (9, 10, 11) .

9. Dispositif d'éclairage selon l'une des revendications précédentes, **caractérisé en ce que** le dispositif d'éclairage est un feu arrière ou un projecteur.

10. Dispositif d'éclairage selon l'une des revendications précédentes, **caractérisé en ce qu'**au moins deux modules d'éclairage (1, 1') sont associés au dispositif d'éclairage, un seul module d'éclairage (1) comprenant les capteurs (9, 10, 11).
